# EUROPEAN PATENT SPECIFICATION

(11) **EP 4 340 450 B1**
(45) Date of publication and mention of the grant of the patent: **15.04.2026**
(21) Application number: 22909379.4
(22) Date of filing: 07.09.2022
(51) Int. Cl.: H04W 60/00, H04W 60/04, H04W 36/00

(54) **CALL PROCESSING METHOD AND APPARATUS**
ANRUFVERARBEITUNGSVERFAHREN UND -VORRICHTUNG
PROCÉDÉ ET APPAREIL DE TRAITEMENT D'APPEL

(30) Priority: 22.12.2021 CN 202111583519; 23.03.2022 CN 202210294836
(43) Date of publication of application: 20.03.2024
(73) Proprietor: Honor Device Co., Ltd., Shenzhen, Guangdong 518040 (CN)
(72) Inventor: LI, Haibo, Shenzhen, Guangdong 518040 (CN); XUE, Chao, Shenzhen, Guangdong 518040 (CN)
(74) Representative: Isarpatent
(86) International application number: PCT/CN2022/117563
(87) International publication number: WO 2023/116056

(56) References cited:
- WO-A1-2021/135819
- WO-A1-2021/135819
- CN-A- 112 399 511
- CN-A- 113 271 645
- US-A1- 2018 132 141
- US-A1- 2020 374 777
- ZHOU SHIYU ET AL: "Fault Diagnosis of 5G Voice Service Based on Multi-sources data", 2021 IEEE 20TH INTERNATIONAL CONFERENCE ON TRUST, SECURITY AND PRIVACY IN COMPUTING AND COMMUNICATIONS (TRUSTCOM), IEEE, 20 October 2021 (2021-10-20), pages 1554 - 1558, XP034097365, DOI: 10.1109/TRUSTCOM53373.2021.00225
- ANRITSU LTD ET AL: "Correction to EPS Fallback TC 11.1.8 and 11.1.9", vol. RAN WG5, no. Online; 20211108 - 20211119, 2 December 2021 (2021-12-02), XP052086009, Retrieved from the Internet <URL:https://ftp.3gpp.org/tsg_ran/TSG_RAN/TSGR_94e/Docs/RP-212800.zip 38523-1_CR2514_(Rel-16)_R5-216806_11_1_X.docx> [retrieved on 20211202]

## Description

### TECHNICAL FIELD

This application relates to the field of communication technologies, and in particular, to a call processing method and an electronic device.

### BACKGROUND

5G new radio (5G New Radio, 5G NR) technology, NR for short, is a communication technology that is gradually being commercialized on a large scale. However, a current 5G network does not support voice calls. Therefore, after a mobile phone camps on an NR network, if the mobile phone initiates a call or is called, the mobile phone is switched from the 5G network on which the mobile phone camps to a long term evolution (Long Term Evolution, LTE) network (also known as a 4G network) to perform a call service in the LTE network. This operation is usually referred to as an emergency procedures fallback (Emergency procedures Fallback, EPS FB).

Document "Fault Diagnosis of 5G Voice Service Based on Multi-sources data" by Shiyu Zhou, et al., 2021 IEEE 20TH INTERNATIONAL CONFERENCE ON TRUST, SECURITY AND PRIVACY IN COMPUTING AND COMMUNICATIONS (TRUSTCOM), IEEE, 20 October 2021 (2021-10-20), pages 1554-1558, XP034097365, discloses a fault diagnosis method for EPS-Fallback.

WO 2021/135819 A1 discloses methods, apparatus and devices for registration of a user equipment in a communication network.

US 2018/132141 A1 discloses a network-based solution of supporting IP multimedia subsystem (IMS) call setup in a next generation system (5GS).

Document " Correction to EPS Fallback TC 11.1.8 and 11.1.9", from ANRITSU LTD, et al., 3GPP DRAFT, RP-212800, 3RD GENERATION PARTNERSHIP PROJECT (3Gpp), MOBILE COMPETENCE CENTRE; 650, ROUTE DES LUCIOLES; F-06921 SOPHIA-ANTIPOLIS CEDEX; FRANCE vol. RAN WG5, no. Online, 20211108 - 20211119, 2 December 2021 (2021-12-02), XP052086009, discloses some corrections to EPS Fallback.

CN 112 399 511 A discloses 5G NR voice call EPS fallback enhancement.

### SUMMARY

This application provides a call processing method and an electronic device, as defined in the appended set of claims, aiming to improve a success rate of establishing an EPS FB call.

To achieve the objective, this application provides the following technical solutions:

A first aspect of this application provides a call processing method, which is used in an electronic device. The electronic device that is called or initiates a call camps on a first cell of an LTE network after being redirected form a 5G network to the LTE network. The first cell belongs to a tracking area. The method includes: after tracking area update fails, searching, in response to identifying an abnormal signaling flow, for an available cell that does not belong to a tracking area, and initiating the tracking area update in the available cell to attempt to establish a call. The identification of the abnormal signaling flow indicates that the tracking area update may fail because signaling is not sent. Therefore, it is attempted to establish a call in the available cell that does not belong to the tracking area, which can improve a possibility of successfully establishing a call after the redirection from the 5G network to the LTE network.

Before the searching, in response to identifying an abnormal signaling flow, for an available cell that does not belong to a tracking area, the method further includes: adding a tracking area code to a forbidden list.

The method further includes: triggering reregistration on the 5G network in response to failing to find the available cell. The reregistration can clear the forbidden list, which improves a possibility of successfully establishing a call after the redirection from the 5G network to the LTE network a next time.

In some implementations, the identifying an abnormal signaling flow includes: identifying multiple times retransmissions of the same signaling; or identifying that signaling fails to be sent. The multiple times retransmissions of the same signaling and that the signaling fails to be sent are common reasons for failures to update a tracking area. Therefore, for the above two specific cases of an abnormal signaling flow, the possibility of successfully establishing a call after the redirection from the 5G network to the LTE network can be further improved.

In some implementations, before the triggering reregistration on the 5G network, the method further includes: initiating the tracking area update in a cell belonging to the tracking area to attempt to establish the call, to establish the call as much as possible, thereby improving the possibility of successfully establishing a call.

In some implementations, after the initiating the tracking area update in the available cell, the method further includes: recording the available cell as a preferred cell in response to the call being successfully established, to provide convenience and basis for subsequent selection of a cell to camp on. The preferred cell is a cell in which the call is successfully established, and therefore the possibility of successfully establishing a call subsequently can be further improved.

In some implementations, after the initiating the tracking area update in the available cell, the method further includes: adding the first cell to a blacklist in response to the tracking area update fails, to provide convenience and basis for subsequent selection of a cell to camp on, so that the possibility of successfully establishing a call subsequently can be further improved.

In some implementations, after the clearing the forbidden list, the method further includes: camping, by the electronic device, on a second cell of the LTE after being called again or initiating a call again and being redirected from the 5G network to the LTE network, where the second cell is not in the blacklist and is the preferred cell; and establishing the call in the second cell, so that the possibility of successfully establishing a call can be further improved.

A second aspect of this application provides an electronic device, including: a memory and at least one processor, where the memory is configured to store an application program, and the at least one processor is configured to execute the application program to implement the call processing method in the first aspect or the second aspect of this application.

A fourth aspect of this application provides a computer storage medium, configured to store a computer program. The computer program, when being executed, is specifically used for implementing the call processing method in the first aspect or the second aspect.

A fifth aspect of this application provides a computer program product. When the computer program product is run on a computer, the computer is enabled to perform the call processing method in the first aspect.

### BRIEF DESCRIPTION OF DRAWINGS

FIG. 1a is an example diagram of a 5G network and a 4G network covering the same area;
FIG. 1b is an example diagram of a mobile phone makes a call under coverage of a 4G network;
FIG. 2A and FIG. 2B are flowcharts of a call that fails to be established after a fallback from a 5G network to a 4G network;
FIG. 3A and FIG. 3B are flowcharts of a call processing method according to an embodiment of this application;
FIG. 4A and FIG. 4B are flowcharts of another call processing method according to an embodiment of this application;
FIG. 5A and FIG. 5B are flowcharts of another call processing method according to an embodiment of this application;
FIG. 6A and FIG. 6B are flowcharts of another call processing method according to an embodiment of this application;
FIG. 7 is an example diagram of a hardware structure of an electronic device according to an embodiment of this application; and
FIG. 8 is an example diagram of a software framework of an electronic device according to an embodiment of this application.

### DESCRIPTION OF EMBODIMENTS

The following clearly and completely describes technical solutions in embodiments of this application with reference to the accompanying drawings in embodiments of this application. Terms used in the following embodiments are merely intended for describing specific embodiments, but are not intended to limit this application. As used in this specification and the claims of this application, a singular expression form, "one", "a", "the", "foregoing", "said", or "this", is intended to also include expression forms such as "one or more", unless clearly indicated to the contrary in the context. It should be further understood that in the embodiments of this application, "one or more" means one, two, or more than two, and "and/or" describes an association relationship between associated objects and indicates that three relationships may exist. For example, A and/or B may indicate the following cases: Only A exists, both A and B exist, and only B exists, where A and B may be singular or plural. The character "/" usually indicates that associated objects are in an "or" relationship.

As described in this specification, referring to "an embodiment", "some embodiments", or the like means that one or more embodiments of this application include particular features, structures, or characteristics described with reference to the embodiment. Therefore, the statements "in one embodiment", "in some embodiments", "in some other embodiments", "in further embodiments", and the like in different places in this specification do not necessarily refer to the same embodiment, but mean "one or more but not all embodiments", unless otherwise specially emphasized in other ways. The terms "include", "comprise", and "have" and variants thereof all mean "include but are not limited to", unless otherwise specially emphasized.

A plurality of involved in embodiments of this application refers to two or more. It should be noted that in description of the embodiments of this application, words such as "first" and "second" are merely used for distinguishing between descriptions, and cannot be understood as an indication or implication of relative importance, or cannot be understood as an indication or implication of a sequence.

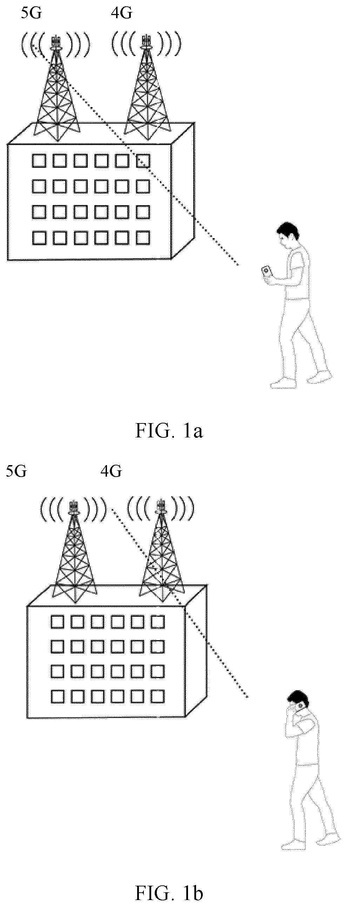

In FIG. 1a, a user does not make a call or answer a call. In this case, a mobile phone usually camps on a cell (cell) of a 5G network (certainly, the mobile phone may camp on a cell of an LTE network). In FIG. 1a, the mobile phone is connected to a 5G base station, indicating that the mobile phone usually camps on a cell of the 5G network. If the user wants to make a call or answer a call, as shown in FIG. 1b, the mobile phone needs to be switched to the LTE network. In other words, the mobile phone can only make a call or answer a call in the LTE network. In FIG. 1b, the mobile phone is connected to a 4G base station, indicating that the mobile phone camps on a cell of a 4G network.

However, the inventor finds during research that in an EPS FB process, after a terminal is redirected from a 5G network to a 4G network, a success rate of calls needs to be improved.

FIG. 1b is used as an example. In a case that a mobile phone initiates a call, after a user dials, the call fails to be established, and the user may hear a voice prompt "The subscriber you dialed is busy now". Assuming that the user does not move with the mobile phone for a long distance and an interval between a next call and the current call does not exceed specific duration (for example, 24 hours), yet a next call still fails to be established, and the user hears a voice prompt "The subscriber you dialed cannot be connected for the moment".

The case is similar when the mobile phone is called. Neither a peer mobile phone nor a local mobile phone can successfully establish a call procedure for a current call or a next call. The peer mobile phone issues the voice prompt "The subscriber you dialed is busy now" or "The subscriber you dialed cannot be connected for the moment".

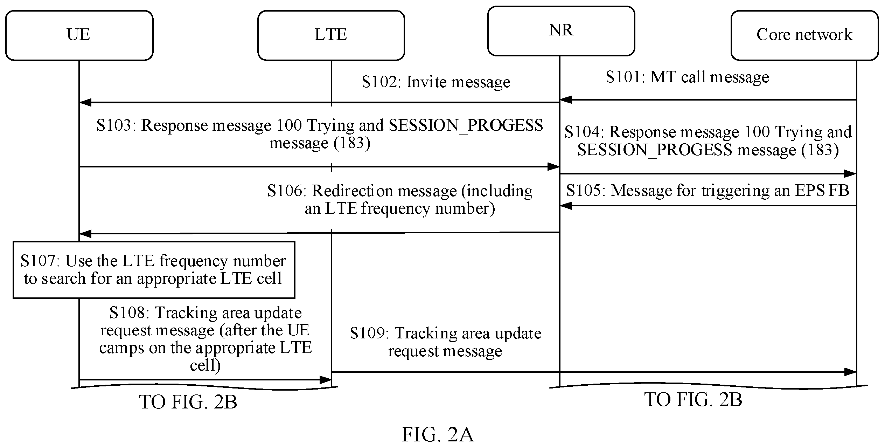

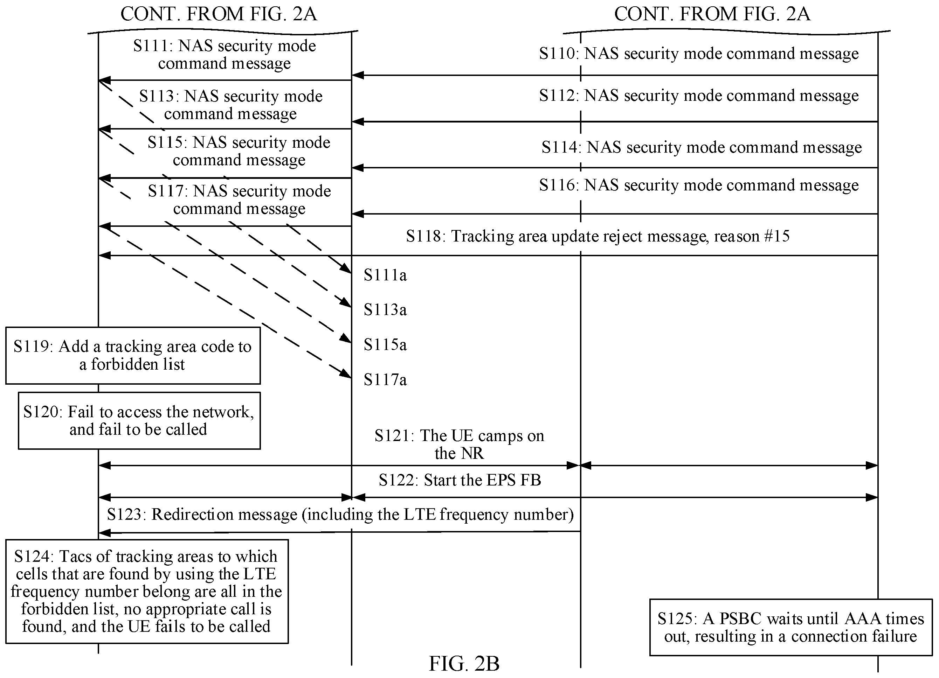

The following analyzes, with reference to FIG. 2A and FIG. 2B, the reason why a success rate of calls is not high when a terminal is redirected from a 5G network to a 4G network:

An example in which a mobile phone is called is used in FIG. 2A and FIG. 2B, and includes the following steps.

S101: After receiving a mobile terminated call (Mobile Terminated Call, MT call) message, a core network forwards the MT call message to NR.

In the embodiments and the accompanying drawings of this application, the NR refers to a wireless access apparatus of the 5G network.

S102: The NR sends, in response to the MT call message, an invite (invite) message to user equipment (User Equipment, UE).

The invite message usually carries a message body. The message body includes media information of a calling party. The message body may further include other session information, for example, a resource list.

S103: After receiving the invite message, the UE sends a response message 100 Trying and a SESSION_PROGRESS (SESSION_PROGRESS) message (183) to the NR respectively.

S104: The NR sends the response message 100 Trying and the SESSION_PROGRESS message (183) to the core network.

S105: In response to the response message 100 Trying and the SESSION_PROGRESS message (183), the core network sends a message for triggering an EPS FB to the NR.

In some implementations, the core network and the NR perform message exchange to confirm the activation of the EPS FB. S105 is a step of triggering the message exchange. For a specific implementation of the message exchange, refer to a communication protocol. Details are not described herein again. S106: The NR sends a redirection message to the UE.

The redirection message is used for redirecting the UE to an LTE network. The redirection message includes a frequency identification of the LTE network. In this embodiment, for example, the frequency identification is a frequency number.

S107: The UE uses an LTE frequency number to search for an appropriate LTE cell.

For the definition of the appropriate LTE cell and a specific search method, refer to the communication protocol. Details are not described herein again.

S108: After camping on the appropriate LTE cell, the UE initiates a tracking area update request message (Tracking Area Update Request Msg) to LTE.

In the embodiments and the accompanying drawings of this application, the LTE refers to a wireless access apparatus of the 4G network.

In other words, after camping on the appropriate LTE cell, the UE initiates a tracking area update (Tracking Area Update) procedure.

S109: The LTE sends the tracking area update request message to the core network.

S110: In response to the tracking area update request message, the core network sends a non-access stratum (non-access stratum, NAS) security mode command message (Security Mode Command Msg) to the LTE.

It may be understood that the tracking area update request message may be understood as a TAU request. After receiving the TAU request, the core network initiates a NAS security mode command (Security Mode Command, SMC) procedure.

S111: The LTE sends the NAS security mode command message to the UE.

In some implementations (normal cases), the UE feeds back a NAS security command complete message (Security Command Complete Msg) to the LTE in response to the NAS security mode command message, and then the LTE sends the NAS security command complete message to the core network.

In some other implementations, the NAS security command complete message fails to be transmitted to the core network in time due to reasons such as base station abnormality or uplink burst interference. In FIG. 2A and FIG. 2B, a dotted line pointing from the UE to the LTE indicates that the NAS security command complete message sent by the UE fails to be transmitted to the core network in time. A dotted line labeled S111a indicates that the NAS security mode command message sent by the UE in response to S111 fails to be sent to the LTE in time.

In this case, if the core network does not receive the NAS security command complete message or a NAS security command reject message (Security command Reject Msg) within a specified time (for example, 1 second after the NAS security mode command message is sent), the NAS security mode command message is retransmitted, that is, S112 and S113.

S112: The core network sends the NAS security mode command message to the LTE.

S113: The LTE sends the NAS security mode command message to the UE.

In FIG. 2A and FIG. 2B, a dotted line labeled S113a indicates that the NAS security mode command message sent by the UE in response to S113 fails to be sent to the LTE in time. After sending the NAS security mode command message for the second time, the core network still does not receive the NAS security command complete message or the NAS security command reject message in time. In this case, the NAS security mode command message is retransmitted, that is, S114 and S115.

S114: The core network sends the NAS security mode command message to the LTE.

S115: The LTE sends the NAS security mode command message to the UE.

In FIG. 2A and FIG. 2B, a dotted line labeled S115a indicates that the NAS security mode command message sent by the UE in response to S115 fails to be sent to the LTE in time. After sending the NAS security mode command message for the third time, the core network still does not receive the NAS security command complete message or the NAS security command reject message in time. In this case, the NAS security mode command message is retransmitted, that is, S116 and S117.

S116: The core network sends the NAS security mode command message to the LTE.

S117: The LTE sends the NAS security mode command message to the UE.

In FIG. 2A and FIG. 2B, a dotted line labeled S117a indicates that the NAS security mode command message sent by the UE in response to S117 fails to be sent to the LTE in time. After sending the NAS security mode command message for the fourth time, the core network still does not receive the NAS security command complete message or the NAS security command reject message in time.

That is, it is assumed in FIG. 2A and FIG. 2B that the core network has retransmitted the NAS security mode command message three times (there are a total of four times) and has not received the NAS security command complete message or the NAS security command reject message in time. In this case, the following steps are performed.

S118: The core network sends a tracking area update reject message and a reject reason number #15 to the UE.

According to the specification in the communication protocol, the UE performs S119 after being rejected with the reason #15.

S119: The UE adds a tracking area code (Tracking Area Code, TAC) to a forbidden list (Forbidden List).

A tracking area includes a plurality of (for example, 100) cells. According to the communication protocol, cells in tracking areas in a forbidden list all need to be disabled for 24 hours. Therefore, in a case that the UE still camps on the tracking area (that is, the mobile phone has not moved by a long distance), S120 is performed because the cell is disabled.

S120: The UE cannot access a network and fails to be called.

At this point, a procedure of calling the UE by a peer mobile phone ends. That is, the current call fails. In some implementations, after the current call fails, the peer mobile phone receives a voice prompt "The subscriber you dialed is busy now".

After the procedure of being called ends, since the UE no longer has a call service, S121 is performed.

S121: The UE camps on the NR.

S121 includes at least the step: The UE sends a message of returning to the NR to the NR, and the NR sends the message of returning to the NR to the core network.

It may be understood that the peer mobile phone may initiate a call again if failing to make a call. In this case, S122 is performed after the core network receives again the MT call message for calling the UE.

S122: The core network, the LTE, and the UE start the EPS FB through message exchange.

It may be understood that specific steps of S122 include S101 to S105.

S123: The NR sends a redirection message including the LTE frequency number to the UE.

Assuming that the tracking area in which the UE is located remains unchanged, that is, the UE is still in the tracking area to which the cell on which the UE camps in S107 belongs (that is, the mobile phone has not moved a long distance) and an interval from the last time of failing to be called does not exceed 24 hours, the UE performs S124.

S124: Tacs of tracking areas to which cells that are found by the UE by using the LTE frequency number belong are all in the forbidden list, no appropriate cell can be found, and the UE fails to be called.

S125: A PSBC waits until AAA (authentication (Authentication), authorization (Authorization), and accounting (Accounting)) times out, resulting in a connection failure.

As can be seen from FIG. 2A and FIG. 2B, after the EPS FB, because the core network fails to receive in time the NAS security command complete message fed back by the UE, according to the communication protocol, a tracking area to which a cell on which the UE camps belongs is disabled. In a case that the UE has not moved out of the tracking area and an interval from the last time of failing to initiate a call does not exceed 24 hours, because the tracking area is disabled, there is no available cell for either the current call or a next call, causing a call to fail.

To resolve the above problems, embodiments of this application provide a call processing method, aiming to improve a success rate of EPS FB calls. It may be understood that a successful call means that regardless of whether the UE initiates a call or is called, a call procedure can be successfully established with peer UE.

A scenario to which the following embodiments of this application are applied is that an electronic device may access a 5G standalone (Standalone, SA) network or an LTE network. In a case that the electronic device camps on the 5G SA network, the electronic device is called by or initiates a call to a peer electronic device.

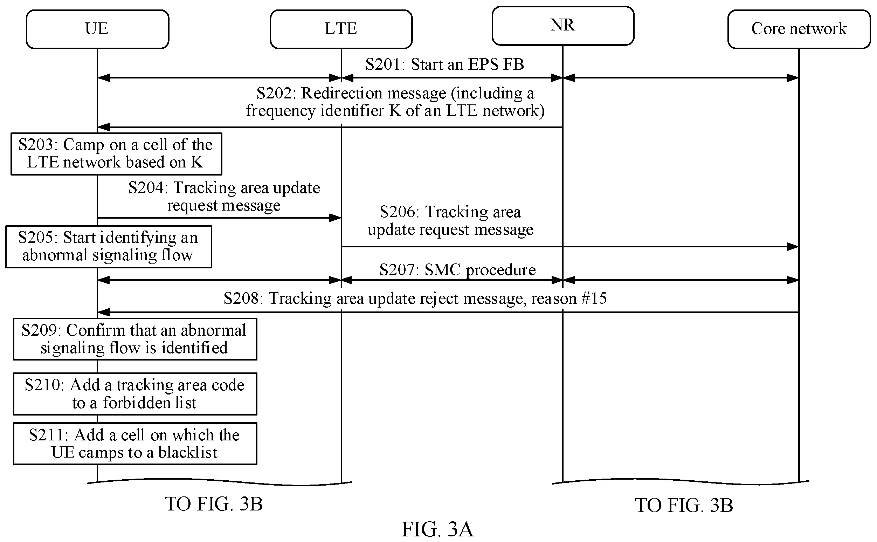

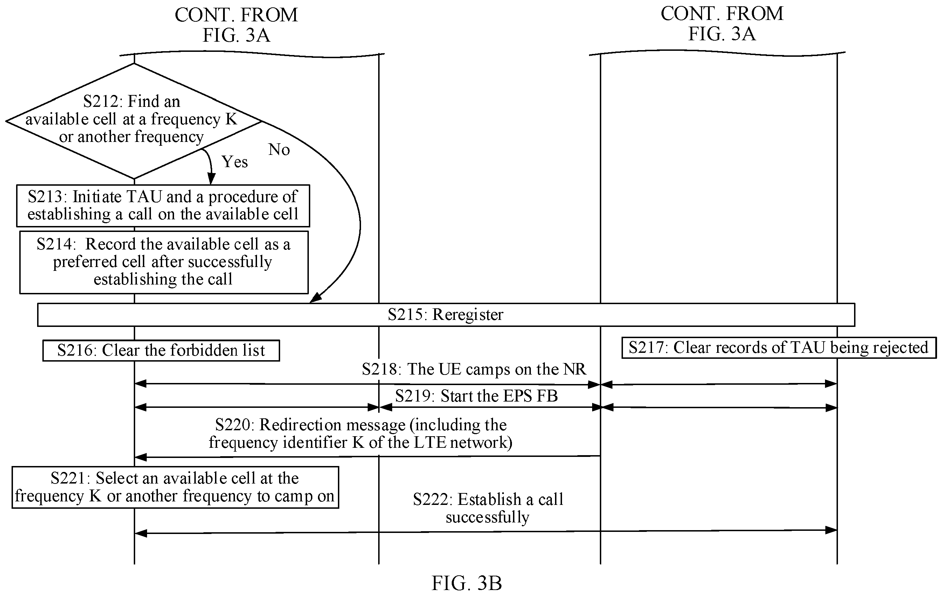

FIG. 3A and FIG. 3B are flowcharts of a call processing method according to an embodiment of this application. The method includes the following steps.

S201: After a core network receives an MT message or a mobile originated call (Mobile Originated Call, MO Call) message, the core network, an NR, an LTE, and UE perform message exchange to start an EPS FB.

It may be understood that S201 is a summary of S101 to S105. That is, for a specific implementation of S201, refer to S101 to S105. Details are not described herein again.

S202: The NR sends a redirection message to the UE.

In this step, a frequency identifier of the LTE network included in the redirection message is recorded as K.

S203: The UE camps on a cell of the LTE network based on K.

It may be understood that after the UE finds an appropriate cell in the LTE network using an LTE frequency number, the UE camps on the cell.

S204: The UE sends a tracking area update request message to the LTE.

It may be understood that a tracking area indicated by the tracking area update request message is a tracking area to which the cell that is of the LTE network and on which the UE camps belongs.

S205: The UE starts identifying an abnormal signaling flow.

It may be understood that the UE may create at least one process or thread for identifying an abnormal signaling flow, to start identifying an abnormal signaling flow.

In some implementations, the abnormal signaling flow is multiple times retransmissions of the same signaling. For example, if it is detected that before the UE receives a TAU ACCEPT message, the UE has received a NAS security mode command message and has sent a NAS security command complete message but then received the NAS security mode command message, it is determined that an abnormal signaling flow is identified.

In some other implementations, the abnormal signaling flow is that signaling fails to be sent. It may be inferred, by collecting statistics of a sending status of packet data convergence protocol (Packet Data Convergence Protocol, PDCP) and/or radio link control (Radio Link Control, RLC) layer protocol data packets, whether the NAS security command complete (Security command complete) message fails to be sent. If the message fails to be sent, it is determined that an abnormal signaling flow is identified.

In a case that an abnormal signaling flow is identified, S210 to S216 and S221 are performed.

S206: The LTE sends the tracking area update request message to the core network.

It may be understood that an execution sequence of S205 and S206 is not limited.

S207: The core network, the LTE, and the UE perform an SMC procedure.

In some implementations, S207 is performed by a mobile management entity (Mobile Management Entity, MME) that is used as a device of the core network.

It may be understood that for a specific implementation of S207, refer to S110 to S117 (including S111a, S113a, S115a, and S117a). In this embodiment, if the core network has not received the security command complete message or a security command reject message fed back by the UE, S208 is performed.

S208: The core network sends a tracking area update reject message and a reject reason number #15 to the UE.

S209: The UE confirms that an abnormal signaling flow is identified.

It may be understood that a triggering condition of S209 is receiving the tracking area update reject message and/or the reject reason number #15.

Because the identification of an abnormal signaling flow is started in S205, and S207 includes S110 to S117, that is, the retransmitted NAS security mode command messages are received repeatedly, it is confirmed that an abnormal signaling flow is identified.

S210: The UE adds a tracking area code (Tracking Area Code, TAC) to a forbidden list (Forbidden List).

It may be understood that a tracking area indicated by the TAC is a tracking area to which the cell that is of the LTE network and on which the UE camps belongs.

S211: The UE adds a cell on which the UE camps to a blacklist.

It may be understood that the UE receives the tracking area update reject message and the reject reason number #15, and in combination with S111, the NAS security command complete message fails to be transmitted to the core network in time due to reasons such as base station abnormality or uplink burst interference. Therefore, it may be determined that a signal of a cell on which the UE currently camps is not good. Therefore, to improve the possibility of successfully establishing a call subsequently, the cell on which the UE currently camps is added to the blacklist.

S212: The UE determines whether the UE finds an available cell at a frequency K or another frequency.

The available cell may be understood as a cell in which the LTE network can be normally connected. It may be understood that a tac of the tracking area to which the available cell belongs is not in the forbidden list.

In some implementations, the UE first searches for an available cell at the frequency K. If no available cell is found at the frequency K, the UE searches for an available cell at another frequency. The another frequency may be an available frequency preconfigured in the UE.

In some implementations, a cell information broadcasted by a base station carries an identifier. The identifier is used for indicating whether the cell is an acceptable cell, an appropriate cell, a forbidden cell, or the like. The UE may determine an available cell through the identifier and signal strength of the cell.

If a determination result of S212 is yes, S213 and S214 are performed. If the determination result of S212 is no, S215 and the subsequent procedures of S215 are performed.

S213: The UE initiates TAU and a procedure of establishing a call on the available cell.

For specific steps of initiating TAU, refer to S108. In addition, referring to S110 and S111 (which may also include S112 to S117), a procedure of establishing a call includes the SMC procedure. The procedure of establishing a call may further include other steps. Refer to the communication protocol, Details are not described herein again.

The cell is available, that is, a tac of the tracking area to which the cell belongs is not in the forbidden list. Therefore, a call may be successfully established. It is noted that initiating the procedure of establishing a call cannot necessarily successfully establish of a call. Therefore, the procedure of initiating establishment of a call may be understood as an attempt to establish a call.

S214: The UE records the available cell as a preferred cell after successfully establishing the call.

The objective of S214 is to enable the UE to preferentially select, in subsequent calls, a cell in which a call has been successfully established, to improve a success rate of calls.

It may be understood that if no available cell is found, a call cannot be established, and the current call (whether the UE initiates a call or is called) fails.

However, in a procedure in this embodiment, even if the current call fails, S215 to S217 still need to be performed, and the objective is to improve the possibility of successfully establishing a next call.

S215: The UE performs reregistration.

The registration is registration with a network, and reregistration is registration with the network again.

In this step, in response to the determination result of S212 being no, the UE issues a reregistration instruction to trigger reregistration.

According to the communication protocol, the reregistration instruction is an instruction issued after the UE performs the following operations:

1. Turn on an airplane mode and then turn off the airplane mode.

That is, the UE is switched from a 5G network or a 4G network to the airplane mode. After the airplane mode is turned off, the UE reregisters with the 5G network or the 4G network.

2. Remove an SIM card, and insert the SIM card again.

In this step, the user does not need to perform the operations 1 and 2. Instead, in response to the determination result of S212 being no, to implement automatic reregistration of the UE.

In some implementations, the reregistration instruction may be issued by a module in a software framework running in the UE or by a chip, which is not limited herein.

It may be understood that according to the communication protocol, reregistration is triggered by the UE and completed by the UE, the LTE, and the core network together. For a specific procedure, refer to the communication protocol, Details are not described herein again.

According to the protocol, after the UE is reregistered, the UE and the network perform the following steps separately.

S216: The UE clears the forbidden list.

S217: The core network clears records of TAU being rejected.

It may be understood that after the core network sends a tracking area update reject message and a reject reason number #15, according to the communication protocol, the core network further needs to record a status of TAU being rejected. In this step, the core network clears this record.

According to the communication protocol, in a case that the UE supports the 5G network and the LTE network, in some implementation, UE in an idle state preferentially camps on the 5G network. Therefore, the UE triggers S218 according to the communication protocol.

S218: The UE, the NR, and the core network implement camping of the UE on the NR through message exchange.

For a procedure of information exchange between the UE, the NR, and the core network, refer to the communication protocol. Details are not described again herein.

After receiving an MT or MO message again, the core network triggers the EPS FB, and S219 is performed.

S219: The core network, the NR, the LTE, and the UE start the EPS FB through message exchange.

S220: The NR delivers a redirection message including a frequency identifier K of the LTE network to the UE.

S221: The UE selects an available cell at the frequency K or another frequency to camp on.

It may be understood that, based on the foregoing steps, the previous call may or may not succeed. If the previous call succeeds, the preferred cell is recorded in S214. Therefore, one implementation of this step is to preferentially camp on the preferred cell and avoid camping on a blacklisted cell.

In some implementations, the UE directly camps on the preferred cell, to obtain a higher possibility of successfully establishing a call with lower cell search costs. In some other implementations, the UE may fail to camp on the preferred cell, and the UE searches for an available cell again. In a search process, the UE is kept from selecting a cell in the blacklist, that is, a blacklisted cell. In combination with S211, the UE is kept from camping on a blacklisted cell, so that the possibility of successfully establishing a call can be improved.

If the previous call fails, there is no preferred cell. Therefore, another implementation of this step is to select a cell other than a blacklisted cell to camp on, to increase the possibility of successfully establishing a call.

After the reregistration, the forbidden list is cleared, and records of TUA being rejected is cleared. Therefore, even if the UE has not moved out of the tracking area that has been written in the forbidden list and an interval from the last time of failing to initiate a call does not exceed 24 hours, the UE can be more likely to camp on an available cell in this step.

S222: Establish a call between the UE and the core network successfully.

It can be seen from the procedure shown in FIG. 3A and FIG. 3B that in a case that the tac of the tracking area to which the found cell belongs is in the forbidden list and a call cannot be successfully established, the UE continues to search for an available cell and initiate TAU and a procedure of establishing a call, to improve a success rate of EPS FB calls.

Furthermore, even if the current call fails to be established, because the UE triggers reregistration, a possibility of successfully establishing a next call can be improved.

Moreover, the procedure in this embodiment simulates a scenario of manually triggering reregistration, and therefore is compatible with existing protocols. That is, in the framework of existing protocols, the possibility of successfully establishing a call is improved.

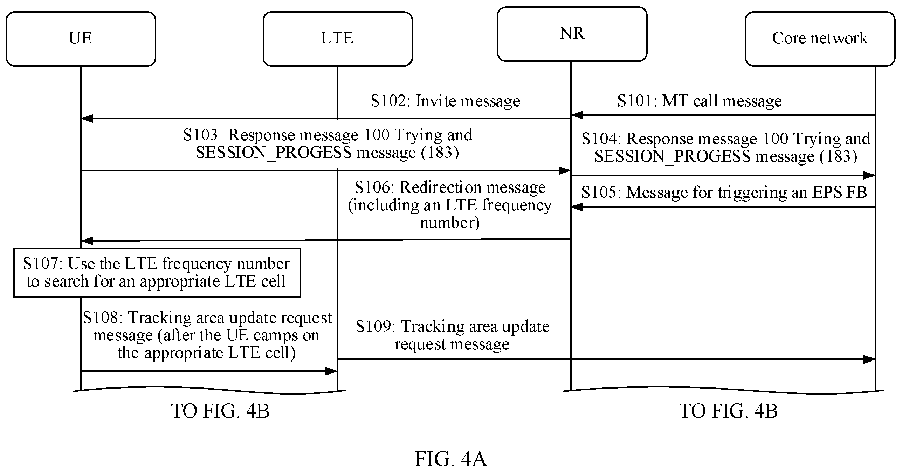

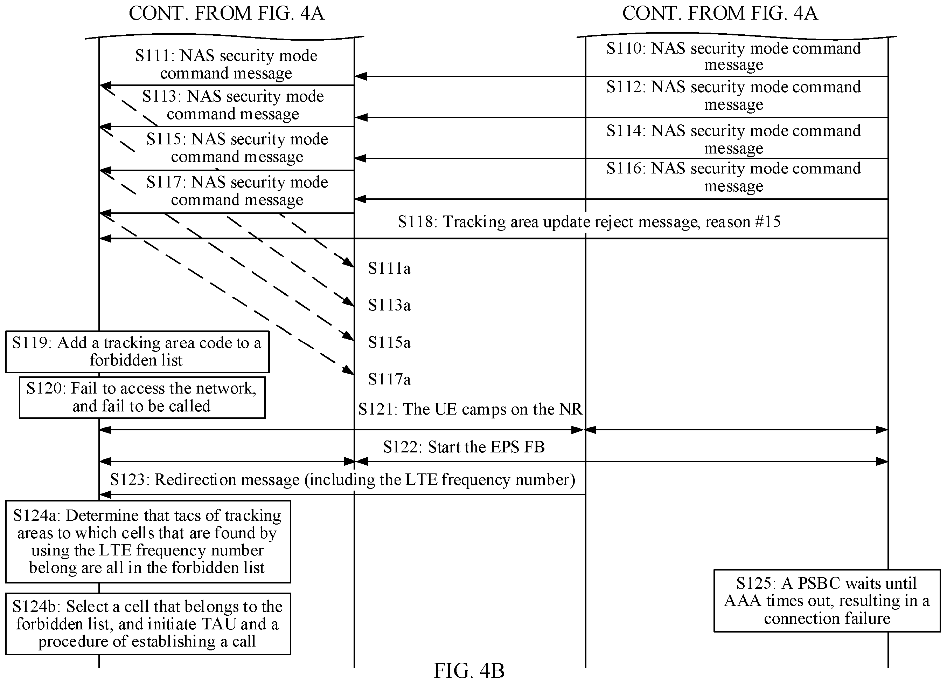

FIG. 4A and FIG. 4B show a procedure of another call processing method according to an embodiment of this application. Compared with FIG. 2A and FIG. 2B, the following improvements are made.

S 124 is replaced with the following steps.

S 124a: Determine that tacs of tracking areas to which cells that are found by using the LTE frequency number belong are all in the forbidden list.

S 124b: Select a cell that belongs to the forbidden list, and initiate TAU and a procedure of establishing a call.

It may be understood that the cell that belongs to the forbidden list is a cell with a tac of the tracking area to which the cell belongs being in the forbidden list.

In practice, because there is a possibility that the core network allows to use a cell belonging to the forbidden list, the method in this embodiment uses this possibility to maximize the possibility of successfully establishing a call procedure for a next call.

It may be understood that in a case that TAU and a procedure of establishing a call fails to be initiated in a cell that belongs to the forbidden list, S125 is still performed.

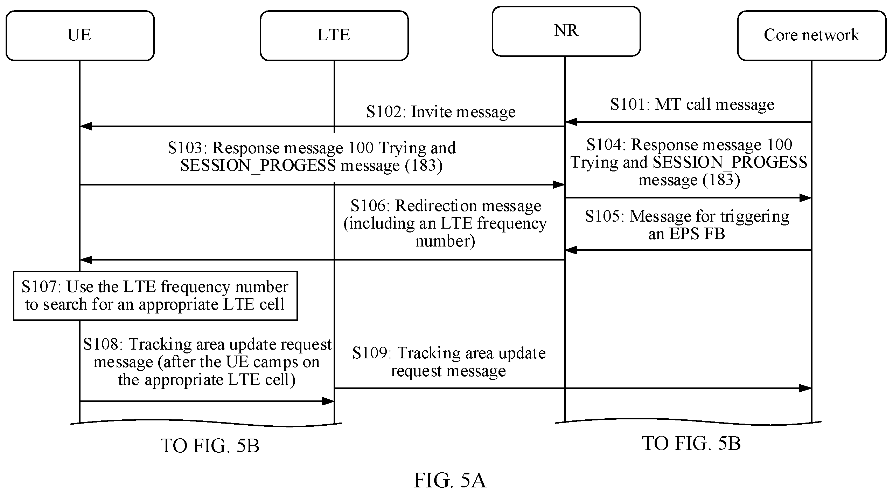

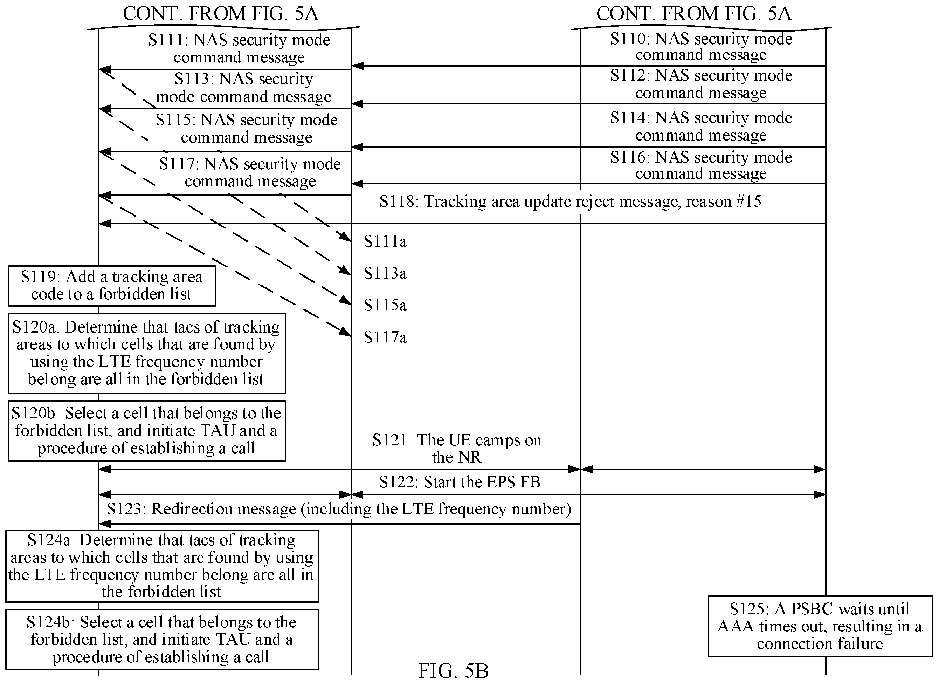

It may be understood that, in the current call, it may be attempted to select a cell that belongs to the forbidden list to initiate TAU and a procedure of establishing a call. That is, as shown in FIG. 5A and FIG. 5B, S 120 is replaced with S120a and S120b.

S 120a: Determine that tacs of tracking areas to which cells that are found by using the LTE frequency number belong are all in the forbidden list.

S 120b: Select a cell that belongs to the forbidden list, and initiate TAU and a procedure of establishing a call.

It may be understood that, a call procedure may be successfully established after S 120b. In this case, subsequent steps are no longer performed. A call procedure may still fail to be established after S120b. In this case, subsequent steps are performed. If a call procedure still fails to be established after S124b, S125 is performed.

The procedure shown in FIG. 5A and FIG. 5B can improve a possibility of successfully establishing a current call, so that the success rate of calls is further improved.

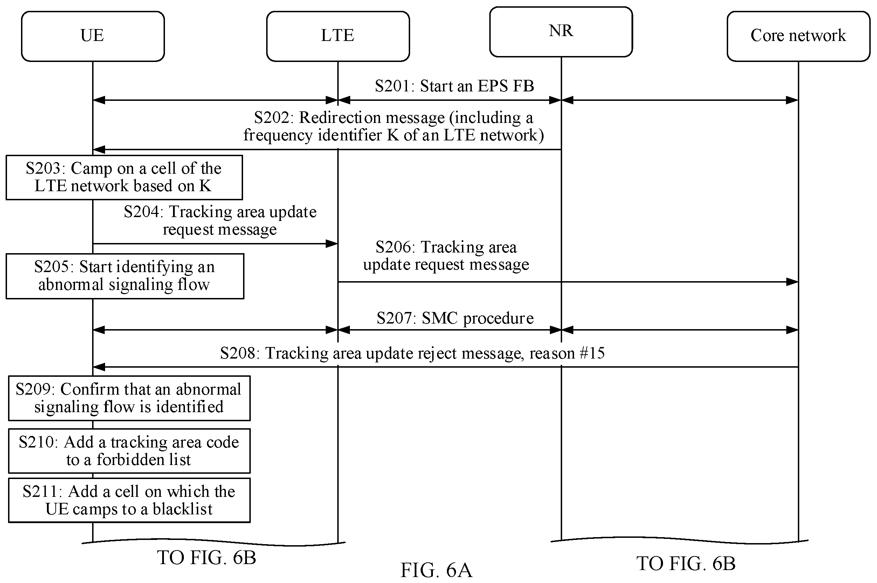

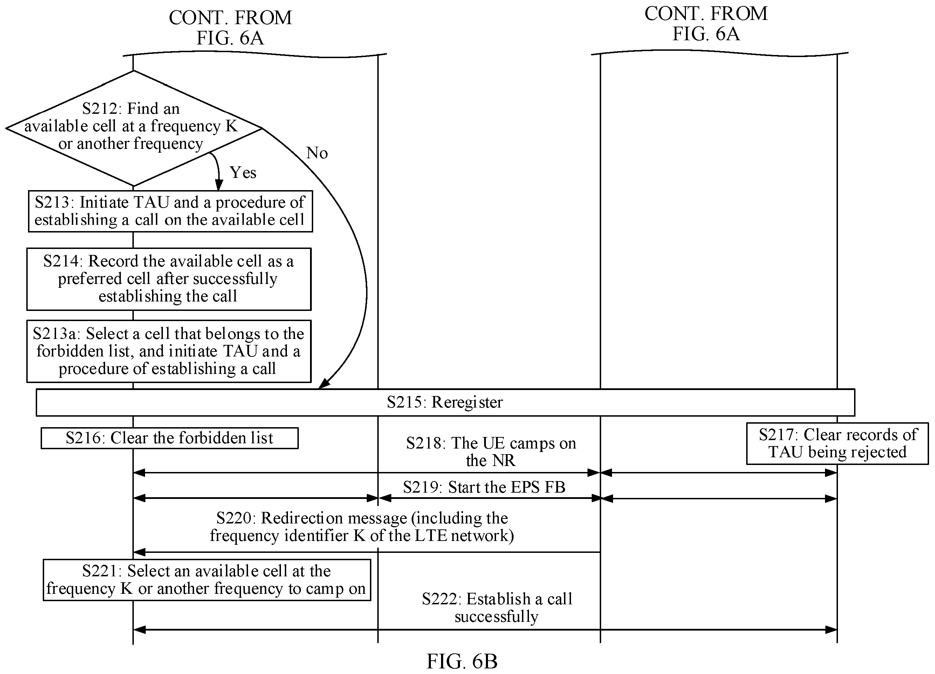

FIG. 6A and FIG. 6B are a call processing method that combines the procedures shown in FIG. 3A, FIG. 3B, FIG. 4A, and FIG. 4B. Compared with the procedure shown in FIG. 3A and FIG. 3B, a difference is as follows.

If a determination result of S212 is no, before S215 is performed, the following step is performed.

S213a: Select a cell that belongs to the forbidden list, and initiate TAU and a procedure of establishing a call.

A call procedure may be successfully established after S213a. However, a tracking area code still exists in the forbidden list. Therefore, a next call may fail to be established. Therefore, to improve the possibility of successfully establishing a next call, after S213a, regardless of whether a call procedure is successfully established in S213a, S125 is performed.

It should be noted that in the above embodiments, for the same steps, reference may be made to each other, and details are not described again.

In the procedure shown in FIG. 6A and FIG. 6B, in a case that no available cell is found, a cell is selected from a reject list to attempt to initiate TAU and a procedure of establishing a call, to maximally attempt to successfully establish a call procedure in a current call, so that the possibility of successfully establishing a call procedure after an EPS FB is further improved.

It may be understood that the foregoing description uses an example in which the 5G network is an SA, and the foregoing embodiments of this application are also applicable to non-standalone (Non-Standalone, NSA) networking.

The call processing methods according to the foregoing embodiments may all be applied to an electronic device supporting calls such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, or a smartwatch. The foregoing UE is also a type of the electronic device.

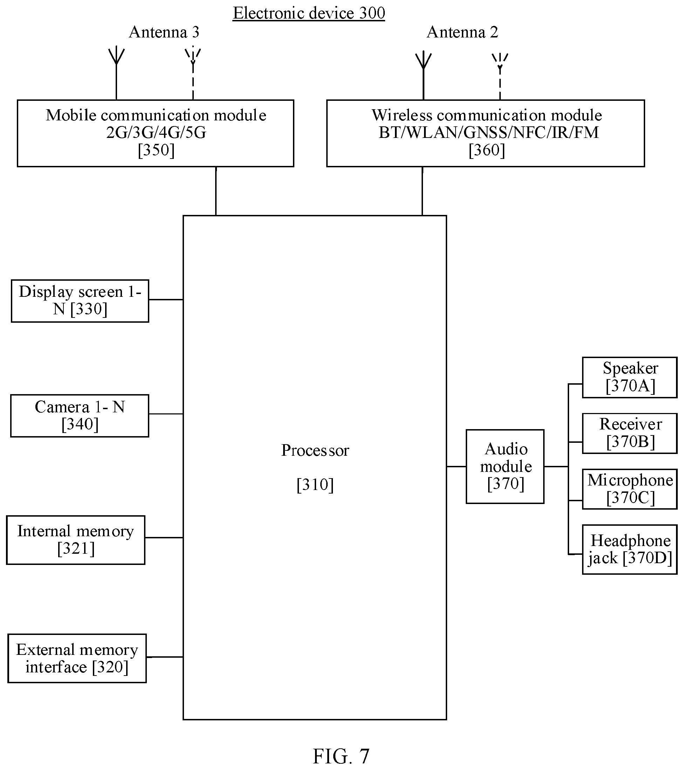

FIG. 7 shows an example of composition of an electronic device according to an embodiment of this application. A mobile phone is used as an example. The electronic device 300 may include a processor 310, an external memory interface 320, an internal memory 321, a display screen 330, a camera 340, an antenna 1, an antenna 2, a mobile communication module 350, a wireless communication module 360, and the like.

It can be understood that the structure illustrated in this embodiment does not constitute a specific limitation on the electronic device. In some other embodiments, the electronic device may include more or fewer components than those shown in the figure, or combine some components, or split some components, or have different component arrangements. Components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

It may be understood that an interface connection relationship between the modules illustrated in this embodiment is merely an example for description, and constitutes no limitation on the structure of the electronic device 300. In some other embodiments of this application, the electronic device 300 may use an interface connection manner different from that in the foregoing embodiment or a combination of a plurality of interface connection manners.

The external memory interface 320 may be configured to be connected to an external storage card, for example, a Micro SD card, to expand a storage capability of the electronic device. The external memory card communicates with the processor 310 through the external memory interface 320, to implement a data storage function, for example, store files such as music and a video into the external memory card.

The internal memory 321 may be configured to store computer-executable program code. The computer-executable program code includes instructions. The processor 310 performs various function applications and data processing of the electronic device 300 by running the instructions stored in the internal memory 321. The built-in memory 321 may include a program storage area and a data storage area. The program storage area may store an operating system, an application required for at least one function (such as a sound playback function and an image display function), and the like. The data storage area may store data (for example, audio data and a phone book) and the like created during use of the electronic device. In addition, the internal memory 321 may include a high-speed random access memory, and may also include a nonvolatile memory such as at least one magnetic disk memory, a flash memory, or a universal flash storage (universal flash storage, UFS). The processor 310 executes various function applications and data processing of the electronic device by running the instructions stored in the internal memory 321 and/or the instructions stored in the memory disposed in the processor.

The electronic device implements a display function through the GPU, the display 330, the application processor. The GPU is a microprocessor for image processing and is connected to the display screen 330 and the application processor. The GPU is configured to perform mathematical and geometric calculation for graphics rendering. The processor 310 may include one or more GPUs, and the GPU executes a program instruction to generate or change display information.

The display screen 330 is configured to display, for example, an image and a video. The display screen 330 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a MiniLED, a MicroLED, a Micro-OLED, a quantum dot light emitting diode (quantum dot light emitting diodes, QLED), or the like. In some embodiments, the electronic device may include 1 or N display screens 330. N is a positive integer greater than 1.

The electronic device may implement a capturing function by using the ISP, the camera 340, the video codec, the GPU, the display screen 330, the application processor, and the like.

The ISP is configured to process data fed back by the camera 340. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further optimize algorithms of noise point, brightness, and skin tone of the image. The ISP may further optimize parameters such as an exposure and a color temperature of a to-be-photographed scene. In some embodiments, the ISP may be disposed in the camera lens 340.

A wireless communication function of the electronic device may be implemented through the antenna 1, the antenna 2, the mobile communication module 350, the wireless communication module 360, the modem processor, and the baseband processor.

The antenna 1 and the antenna 2 are configured to transmit or receive an electromagnetic wave signal. Each antenna in the electronic device may be configured to cover a single communication frequency band or a plurality of communication frequency bands. Different antennas may be multiplexed to improve utilization of the antennas. For example: the antenna 1 may be multiplexed into a diversity antenna of a wireless local area network. In some other embodiments, the antenna may be used together with a tuning switch.

The mobile communication module 350 may provide a solution for wireless communication such as 2G/3G/4G/5G and the like applied to the electronic device. The mobile communication module 350 may include at least one filter, a switch, a power amplifier, a low noise amplifier (LNA), and the like. The mobile communication module 350 may receive an electromagnetic wave through the antenna 1, perform processing such as filtering or amplification on the received electromagnetic wave, and send a processed electromagnetic wave to the modem processor for demodulation. The mobile communication module 350 may further amplify a signal modulated by the modem processor, and convert the signal into an electromagnetic wave through the antenna 1 for radiation. In some embodiments, at least some function modules of the mobile communication module 350 may be arranged in the processor 310. In some embodiments, at least some of the functional modules of the mobile communication module 350 and at least some of modules of the processor 310 may be arranged in a same component.

In some embodiments, the electronic device initiates or receives a call request through the mobile communication module 350 and the antenna 1.

The wireless communication module 360 may provide a solution to wireless communication applicable to the electronic device, such as a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 360 may be one or more devices that integrate at least one communication processing module. The wireless communication module 360 receives an electromagnetic wave through the antenna 3, modulates and filters an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave through the antenna 2 for radiation.

The electronic device 300 may implement audio functions, for example, music playback and recording, by using the audio module 370, the speaker 370A, the telephone receiver 370B, the microphone 370C, the headset jack 370D, the application processor, for example, music playing and sound recording.

The audio module 370 is configured to convert digital audio information into an analog audio signal for output, and is further configured to convert an analog audio input into a digital audio signal. The audio module 370 may also be configured to encode and decode audio signals. In some embodiments, the audio module 370 may be disposed in the processor 310 or some functional modules in the audio module 370 may be disposed in the processor 310.

The speaker 370A, also referred to as a "horn", is configured to convert an electrical audio signal into a sound signal. The electronic device 300 may be used to listen to music or listen to a hands-free call by using the speaker 370A.

The receiver 370B, also referred to as a "handset", is configured to convert an electrical audio signal into a sound signal. When a call is answered or a voice message is listened to by using the electronic device 300, the receiver 370B may be put close to a human ear to listen to a voice.

The microphone 370C, also referred to as a "microphone" or a "microphone", is configured to convert a sound signal into an electrical signal. When making a call or sending voice information, the user may make a sound near the microphone 370C through the mouth of the user, to input a sound signal into the microphone 370C. At least one microphone 370C may be disposed in the electronic device 300. In some other embodiments, two microphones 370C may be disposed in the electronic device 300, to collect a sound signal and implement a noise reduction function. In some other embodiments, three, four, or more microphones 370C may be alternatively disposed in the electronic device 300, to collect a sound signal, implement noise reduction, recognize a sound source, implement a directional recording function, and the like.

The headset jack 370D is configured to connect to a wired headset. The headset jack 370D may be a USB port, or may be a 3.5 mm open mobile terminal platform (open mobile terminal platform, OMTP) standard interface or a cellular telecommunications industry association of the USA (cellular telecommunications industry association of the USA, CTIA) standard interface.

In addition, an operating system, for example, an iOS operating system, an Android operating system, a Windows operating system, or the like. An application program may be installed and run on the operating system.

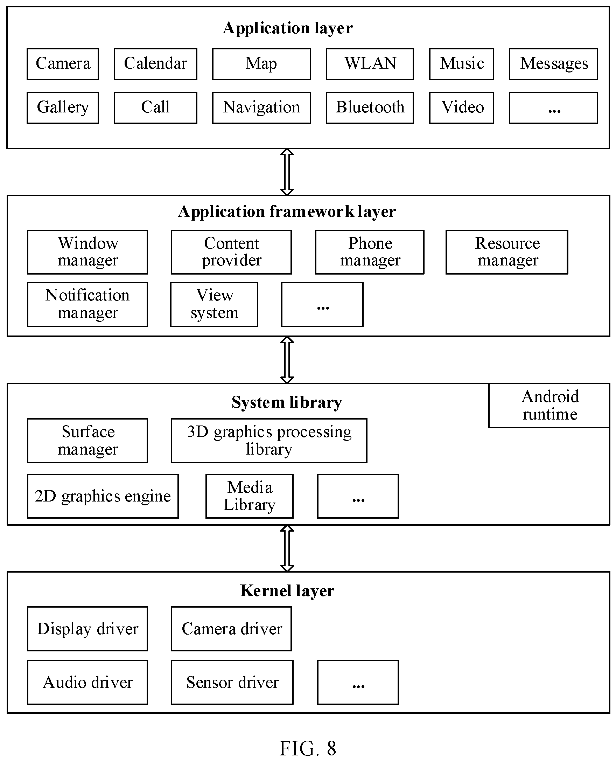

FIG. 8 is a structural block diagram of software of an electronic device according to an embodiment of this application.

The software is divided into several layers in a hierarchical architecture, and each layer has a clear role and responsibility. Layers communicate with each other through a software interface. In some embodiments, the Android system is divided into four layers: an application layer, an application framework layer, an Android runtime (Android runtime) and system library, and a kernel layer from top to down.

The application program layer may comprise a series of application program packages. As shown in FIG. 8, the application packages may include applications such as Camera, Gallery, Calendar, Calls, Map, Navigation, WLAN, Bluetooth, Music, Videos, and Messages.

The application framework layer provides an application programming interface (application programming interface, API) and a programming framework for the application at the application layer. The application framework layer includes some predefined functions. As shown in FIG. 8, the application framework layer may include a window manager, a content provider, a telephony manager, a resource manager, a notification manager, a view system, and the like.

The window manager is configured to manage a window program. The window manager may obtain a size of the display, determine whether a status bar exists, perform screen locking, perform screenshot, and the like.

The content provider is configured to store and obtain data, and enable the data to be accessed by an application. The data may include a video, an image, audio, calls that are made and answered, a browsing history and bookmarks, a phone book, and the like.

The call manager is configured to provide a communication function of the electronic device, for example, management of a call state (including getting through, hang-up, and the like).

The resource manager provides various resources for the application, for example, a localized string, an icon, a picture, a layout file, and a video file.

The notification manager enables the application to display notification information in the status bar, and may be configured to convey a notification-type message. The displayed notification information may automatically disappear after a short pause without a need to perform user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on the screen in a form of a dialog window. For example, text information is prompted in the status bar, an alert tone is produced, the electronic device vibrates, or an indicator blinks.

The view system includes visual controls such as a text display control and a picture display control. The view system may be configured to create an application. A display interface may include one or more views. For example, a display interface including a short message notification icon may include a view for displaying text and a view for displaying a picture.

Android runtime includes a core library and a virtual machine. Android runtime is responsible for scheduling and management of the Android system. In some embodiments of this application, cold start of an application runs in the Android runtime, and the Android runtime obtains an optimized file status parameter of the application. Then, the Android runtime can determine, based on the optimized file status parameter, whether an optimized file is out of date due to system upgrade, and return a determination result to an application control module.

The kernel library includes two parts: a function that needs to be called in Java language and a kernel library of Android.

The application program layer and the application program framework layer are run in the virtual machine. The virtual machine executes java files at the application program layer and the application program framework layer as binary files. The virtual machine is configured to perform functions such as lifecycle management of an object, stack management, thread management, security and exception management, and garbage collection.

The system library may include multiple functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem, and provide 2D and 3D layer fusion for a plurality of applications.

The media library supports various commonly used audio, playback and recording in a video format, still image files, and the like. The media library may support a plurality of audio and video coding formats such as MPEG_2, H.262, MP3, AAC, AMR, JPG, and PNG.

The three-dimensional graphics processing library is used to implement three-dimensional graphics drawing, image rendering and composition, layer processing, and the like.

The two-dimensional graphics engine is a drawing engine for 2D drawings.

The kernel layer is a layer between hardware and software. The kernel layer includes at least a display driver, a camera driver, an audio driver, and a sensor driver.

It should be noted that although this embodiment of this application is described by using the Android system as an example, the basic principle thereof is also applicable to electronic devices based on operating systems such as iOS and Windows.

## Claims

1. A call processing method, performed by an electronic device (300, UE), wherein the electronic device (300, UE) that is called or initiates a call camps on (S203) a first cell of an LTE network after being redirected form a 5G network to the LTE network, **characterized in that** the method comprises:
after tracking area update fails, searching (S212), in response to identifying (S209) an abnormal signaling flow, for an available cell that does not belong to a tracking area, wherein the first cell belongs to the tracking area; and
initiating (S213) the tracking area update in the available cell to attempt to establish a call,
wherein before the searching (S212), in response to identifying (S209) an abnormal signaling flow, for an available cell that does not belong to a tracking area, the method further comprises:
adding (S210) a tracking area code to a forbidden list,
wherein, the method further comprises:
triggering (S215) reregistration on the 5G network in response to failing to find the available cell; and
clearing (S216) the forbidden list after the reregistration.

2. The method according to claim 1, wherein the identifying (S209) an abnormal signaling flow comprises:
identifying multiple times retransmissions of the same signaling; or identifying that signaling fails to be sent.

3. The method according to claim 1 or 2, wherein before the triggering (S215) reregistration on the 5G network, the method further comprises:
initiating the tracking area update in a cell belonging to the tracking area to attempt to establish the call.

4. The method according to any one of claims 1 to 3, wherein after the initiating the tracking area update in the available cell, the method further comprises:
recording (S214) the available cell as a preferred cell in response to the call being successfully established.

5. The method according to any one of claims 1 to 4, further comprising:
adding (S211) the first cell to a blacklist in response to the tracking area update fails.

6. The method according to any one of claims 1 to 5, wherein after the clearing (S216) the forbidden list, the method further comprises:
camping (S221), by the electronic device (300), on a second cell of the LTE after being called again or initiating a call again and being redirected from the 5G network to the LTE network, wherein the second cell is not in the blacklist and is the preferred cell; and
establishing (S222) the call in the second cell.

7. An electronic device (300, UE), comprising:
a memory (321) and at least one processor (310), wherein the memory (321) is configured to store an application program, and the at least one processor (310) is configured to execute the application program to implement the call processing method according to any one of claims 1 to 6.

## Patentansprüche

1. Rufverarbeitungsverfahren, das von einer elektronischen Vorrichtung (300, UE) durchgeführt wird, wobei die elektronische Vorrichtung (300, UE), die angerufen wird oder einen Anruf initiiert, auf einer ersten Zelle eines LTE-Netzwerks campiert (S203), nachdem sie von einem 5G-Netzwerk zum LTE-Netzwerk umgeleitet wurde, **dadurch gekennzeichnet, dass** das Verfahren Folgendes umfasst:
Suchen (S212), nach dem Fehlschlagen einer Tracking-Area-Aktualisierung und als Reaktion auf das Identifizieren (S209) eines abnormalen Signalisierungsflusses, nach einer verfügbaren Zelle, die nicht zu einer Tracking Area gehört, wobei die erste Zelle zu der Tracking Area gehört; und
Initiieren (S213) der Tracking-Area-Aktualisierung in der verfügbaren Zelle, um zu versuchen, einen Anruf aufzubauen,
wobei das Verfahren vor dem Suchen (S212), als Reaktion auf das Identifizieren (S209) eines abnormalen Signalisierungsflusses, nach einer verfügbaren Zelle, die nicht zu einer Tracking Area gehört, ferner Folgendes umfasst:
Hinzufügen (S210) eines Tracking-Area-Codes zu einer Sperrliste,
wobei das Verfahren ferner Folgendes umfasst:
Auslösen (S215) einer Neuregistrierung im 5G-Netzwerk als Reaktion darauf, dass keine verfügbare Zelle gefunden wurde; und
Löschen (S216) der Sperrliste nach der Neuregistrierung.

2. Verfahren nach Anspruch 1, wobei das Identifizieren (S209) eines abnormalen Signalisierungsflusses Folgendes umfasst:
Identifizieren von mehrfachen Neuübertragungen derselben Signalisierung; oder Identifizieren, dass das Senden der Signalisierung fehlschlägt.

3. Verfahren nach Anspruch 1 oder 2, wobei das Verfahren vor dem Auslösen (S215) der Neuregistrierung im 5G-Netzwerk ferner Folgendes umfasst:
Initiieren der Tracking-Area-Aktualisierung in einer Zelle, die zu der Tracking Area gehört, um zu versuchen, den Anruf aufzubauen.

4. Verfahren nach einem der Ansprüche 1 bis 3, wobei das Verfahren nach dem Initiieren der Tracking-Area-Aktualisierung in der verfügbaren Zelle ferner Folgendes umfasst:
Aufzeichnen (S214) der verfügbaren Zelle als eine bevorzugte Zelle als Reaktion darauf, dass der Anruf erfolgreich aufgebaut wurde.

5. Verfahren nach einem der Ansprüche 1 bis 4, ferner umfassend:
Hinzufügen (S211) der ersten Zelle zu einer Blacklist als Reaktion darauf, dass die Tracking-Area-Aktualisierung fehlschlägt.

6. Verfahren nach einem der Ansprüche 1 bis 5, wobei das Verfahren nach dem Löschen (S216) der Sperrliste ferner Folgendes umfasst:
Campieren (S221), durch die elektronische Vorrichtung (300), auf einer zweiten Zelle des LTE, nachdem sie erneut angerufen wurde oder erneut einen Anruf initiiert hat und vom 5G-Netzwerk zum LTE-Netzwerk umgeleitet wurde, wobei die zweite Zelle nicht in der Blacklist ist und die bevorzugte Zelle ist; und
Aufbauen (S222) des Anrufs in der zweiten Zelle.

7. Eine elektronische Vorrichtung (300, UE), umfassend:
einen Speicher (321) und mindestens einen Prozessor (310), wobei der Speicher (321) dazu konfiguriert ist, ein Anwendungsprogramm zu speichern, und der mindestens eine Prozessor (310) dazu konfiguriert ist, das Anwendungsprogramm auszuführen, um das Anrufverarbeitungsverfahren nach einem der Ansprüche 1 bis 6 zu implementieren.

## Revendications

1. Procédé de traitement d'appel, exécuté par un dispositif électronique (300, UE), dans lequel le dispositif électronique (300, UE) qui est appelé ou qui initie un appel réside sur (S203) une première cellule d'un réseau LTE après avoir été redirigé d'un réseau 5G vers le réseau LTE, **caractérisé en ce que** le procédé comprend :
après l'échec de la mise à jour de zone de suivi, la recherche (S212), en réponse à l'identification (S209) d'un flux de signalisation anormal, d'une cellule disponible qui n'appartient pas à une zone de suivi, dans lequel la première cellule appartient à la zone de suivi ; et
l'initiation (S213) de la mise à jour de zone de suivi dans la cellule disponible pour tenter d'établir un appel,
dans lequel avant la recherche (S212), en réponse à l'identification (S209) d'un flux de signalisation anormal, d'une cellule disponible qui n'appartient pas à une zone de suivi, le procédé comprend en outre :
l'ajout (S210) d'un code de zone de suivi à une liste interdite,
dans lequel, le procédé comprend en outre :
le déclenchement (S215) d'un réenregistrement sur le réseau 5G en réponse à l'échec de la recherche de la cellule disponible ; et
l'effacement (S216) de la liste interdite après le réenregistrement.

2. Procédé selon la revendication 1, dans lequel l'identification (S209) d'un flux de signalisation anormal comprend :
l'identification de retransmissions multiples de la même signalisation ; ou l'identification de l'échec de l'envoi de la signalisation.

3. Procédé selon la revendication 1 ou 2, dans lequel avant le déclenchement (S215) du réenregistrement sur le réseau 5G, le procédé comprend en outre :
l'initiation de la mise à jour de zone de suivi dans une cellule appartenant à la zone de suivi pour tenter d'établir l'appel.

4. Procédé selon l'une quelconque des revendications 1 à 3, dans lequel après l'initiation de la mise à jour de zone de suivi dans la cellule disponible, le procédé comprend en outre :
l'enregistrement (S214) de la cellule disponible en tant que cellule préférée en réponse à l'établissement réussi de l'appel.

5. Procédé selon l'une quelconque des revendications 1 à 4, comprenant en outre :
l'ajout (S211) de la première cellule à une liste noire en réponse à l'échec de la mise à jour de zone de suivi.

6. Procédé selon l'une quelconque des revendications 1 à 5, dans lequel après l'effacement (S216) de la liste interdite, le procédé comprend en outre :
la résidence (S221), par le dispositif électronique (300), sur une deuxième cellule du LTE après avoir été appelé à nouveau ou avoir initié un appel à nouveau et avoir été redirigé du réseau 5G vers le réseau LTE, dans lequel la deuxième cellule n'est pas dans la liste noire et est la cellule préférée ; et
l'établissement (S222) de l'appel dans la deuxième cellule.

7. Un dispositif électronique (300, UE), comprenant :
une mémoire (321) et au moins un processeur (310), dans lequel la mémoire (321) est configurée pour stocker un programme d'application, et l'au moins un processeur (310) est configuré pour exécuter le programme d'application pour mettre en œuvre le procédé de traitement d'appel selon l'une quelconque des revendications 1 à 6.
